# EUROPÄISCHE PATENTANMELDUNG

(11) **EP 0 856 365 A2**
(43) Veröffentlichungstag der Anmeldung: **05.08.1998**
(21) Anmeldenummer: 97121011.7
(22) Anmeldetag: 29.11.1997
(51) Int. Cl.: B08B 9/44

(54) **Vorrichtung zum Transportieren von Gefässen**

(30) Priorität: 30.01.1997 DE 19703369
(71) Anmelder: KHS Maschinen- und Anlagenbau Aktiengesellschaft, 44143 Dortmund (DE)
(72) Erfinder: Strohn, Gisbert, 58313 Herdecke (DE); Jendrichowski, Klaus, 49735 Holzwickede (DE)

(57) **Zusammenfassung**

Zur Bewegung der Gefäße in oder aus den Flaschenzellen ist ein Antriebsgetriebe auszubilden, mit welchem ein vorgegebener Bewegungsablauf auf einfache Weise ausgeführt werden kann und zusätzlich alle beliebigen Anforderungen, bedingt durch unterschiedliche Flaschengrößen und dergleichen, durch entsprechende variable Anpassung der einzelnen Getriebeglieder abgedeckt werden können.

Hierzu wird eine Vorrichtung zum Transportieren von Gefäßen wie Flaschen und dgl. entlang einer Abstützfläche (7), beispielsweise zum Auf- und Abgeben von Flaschen (1) in bzw. aus Reinigungsmaschinen mit einem Transporteur und einer Übertragungseinrichtung vorgeschlagen, bestehend aus mehreren nebeneinander angeordneten Scheiben (6) mit Mitnehmern (5, 5'), welche um eine gemeinsame Achse (9) rotieren, wobei die Rotationsachse der Mitnehmer (5, 5') entlang einer annähernd geradlinigen Bewegungsbahn (12) in Vorschubrichtung der Übertragungseinrichtung während eines Einschub- oder Ausschubtaktes vor- und zurückbewegbar geführt ist und der jeweils in Arbeitsposition befindliche Einschub- bzw. Mitnehmerarm (5, 5') innerhalb dieses Bewegungsabschnittes (12) von seiner Ausgangs- bzw. Aufnahmeposition in die entsprechende Abgabe- bzw. Einschubposition (8) verfahrbar ist, wobei an der Mitnehmerachse (9) ein Synchronantrieb (19) angeordnet ist, der eine variable Rotationsbewegung der Mitnehmer (5, 5') unmittelbar ansteuert und die Mitnehmerachse (9) an einer Schwinge (10) gelagert ist, die ihrerseits einen weiteren Synchronantrieb (20) aufweist, wobei die Antriebsgeschwindigkeit der Synchronantriebe (19, 20) durch die Bewegungsgeschwindigkeit der Flaschen (1) in der Reinigungsmaschine ansteuerbar ist.

## Beschreibung

Die Erfindung bezieht sich auf eine Vorrichtung zum Transportieren von Gefäßen wie Flaschen und dgl. entlang einer Abstützfläche, beispielsweise zum Auf- und Abgeben von Flaschen in bzw. aus Reinigungsmaschinen mit einem Transporteur und einer Übertragungseinrichtung gemäß Oberbegriff des Anspruchs 1.

Der Einsatz von Mehrwegflaschen in der Getränkeindustrie setzt voraus, daß diese Flaschen nach ihrer Rückkehr vom Verbraucher gereinigt, gefüllt und wieder verschlossen werden. Zu diesem Zwecke werden die Flaschen mehreren Behandlungsstationen bzw. -maschinen zugeführt. Hierzu sind besondere Förderer, welche die Flaschen von einer Standfläche oder einem Transporteur in eine nächsthöhere Position, beispielsweise Aufnahmezellen einer Reinigungsmaschine bzw. umgekehrt, bewegen, bekannt. Dabei wird nicht nur ein durch die Maschinenkonstruktion vorbestimmter Höhenunterschied überbrückt, sondern gleichzeitig auch eine Umlenkung der Flaschen je nach Stellung der Achse einer Aufnahmezelle bewirkt. Eine entsprechende Umlenkung muß auch bei der Entnahme von Flaschen aus Flaschenkörben durchgeführt werden. Zu diesem Zwecke sind Auf- und Abgabevorrichtungen bekannt, welche die Flaschen entlang einer ortsfesten Abstützfläche von einem Transporteur in die Flaschenkörbe bzw. zurück bewegen. Derartige Übertragungseinrichtungen bestehen aus mehreren nebeneinander angeordneten Scheiben, welche mit Mitnehmern ausgestattet sind, die beispielsweise während des Beschickens einer Reinigungsmaschine die Flaschen von unten erfassen und entlang einer Kurvenbahn zu den Flaschenkörben bewegen. Hierbei führen die Mitnehmer eine kreisförmige Bewegung aus, so daß im Endstadium des Einschubs zusätzliche Einrichtungen vorgesehen sein müssen, um die Flaschen bis tief in die weiterführenden Zellen zu stoßen. Man ist zur Vermeidung derartiger Zusatzeinrichtungen in einigen Fällen dazu übergegangen, die ortsfeste Abstützfläche schwenkbar auszubilden, so daß diese im Endstadium der Übergabe eine gewisse Neigung aufzeigt, die ausreicht, um die bereits beschleunigten Flaschen in die Zellen gleiten zu lassen. Bei besonders breiten Aufgabetischen ist die Belastung aufgrund der hohen Anzahl von darauf abgestützten Flaschen relativ hoch, so daß eine gewichtige Konstruktion in Verbindung mit einem erheblichen mechanischen Aufwand zur Durchführung der Schwenkbewegung erforderlich ist.

Ausgehend von solchen Vorrichtungen hat sich unter Verwendung eines ortsfesten Tischfeldes bzw. einer entsprechenden Abstützfläche eine Vorrichtung gemäß der DE-A-2552211 bewährt, bei der die Rotationsachse der Mitnehmer entlang einer im wesentlichen geradlinigen Bewegungsbahn in Vorschubrichtung der Übertragungseinrichtung während eines Ein- und Ausschubtaktes vor und zurückbewegbar geführt ist und wobei der jeweils in Arbeitsposition befindliche Einschubarm bzw. Mitnehmer während dieses Bewegungsabschnittes von seiner Ausgangs- bzw. Aufnahmeposition in die entsprechende Abgabe- bzw. Ausstoßposition verfahrbar ist.

Zur Bewegung der Mitnehmer und der die Mitnehmerachse aufnehmenden Schwinge ist ein Antriebsgetriebe erforderlich, welches hinsichtlich der unterschiedlichen Bewegungsabläufe der einzelnen Getriebeglieder genauestens aufeinander abgestimmt sein muß. Insbesondere bei der Verarbeitung von unterschiedlichen Gefäß-bzw. Flaschengrößen in bezug auf Durchmesser und Höhe, müssen aufgrund der vorgegebenen Getriebeauslegung verschiedene Maßnahmen zur Überbrückung dieser Probleme vorgenommen werden.

Der Erfindung liegt die Aufgabe zugrunde, zur Bewegung der Gefäße in oder aus den Flaschenzellen ein Antriebsgetriebe auszubilden, mit welchem ein vorgegebener Bewegungsablauf auf einfache Weise ausgeführt werden kann und zusätzlich alle beliebigen Anforderungen, bedingt durch unterschiedliche Flaschengrößen und dergleichen, durch entsprechende variable Anpassung der einzelnen Getriebeglieder abgedeckt werden können.

Diese Aufgabe wird bei einer Vorrichtung der eingangs genannten Art durch die Merkmale des Anspruchs 1 gelöst.

Dabei wird ferner vorgeschlagen, daß die Drehzahl der Synchronantriebe einzeln und/oder gemeinsam von einem Hauptantriebsmotor ansteuerbar sind.

Dabei hat es sich als zweckmäßig erwiesen, daß die Mitnehmer während der Übernahme der Gefäße verzögert an diese herangeführt und darauf mit den Gefäßen beschleunigt und zur Übergabe der Gefäße wieder verzögert werden.

Schließlich wird vorgeschlagen, daß mit der Verzögerung der Rotationsgeschwindigkeit der Mitnehmer auch eine Verzögerung der Verschwenkgeschwindigkeit der Schwinge durch den diesen antreibenden Synchronantrieb einleitbar ist.

Mit der erfindungsgemäßen Ausgestaltung können alle innerhalb eines solchen Übertragungsvorganges anfallenden Varianten bzgl. der Getriebeauslegung und Ansteuerung auf einfache Weise gelöst werden.

So ist es denkbar, für jeden Flaschentyp auch in Abhängigkeit von der Durchsatzleistung die jeweils optimale Übertragungsgeschwindigkeit mit einer zugeordneten elektronischen Steuerung auf einfache Weise durch entsprechende Einstellung vorzunehmen. Eine solche Einstellung ist auch im Verhältnis der Synchronantriebe untereinander gegeben und sichergestellt.

Im nachfolgenden wird die Erfindung anhand eines in der Zeichnung dargestellten Ausführungsbeispiels näher erläutert.

In der Zeichnung zeigt:
Fig. 1 eine allgemeine Übertragungseinrichtung zum Aufgeben der Flaschen in Reinigungsmaschinen und
Fig. 2 eine Variante hierzu mit angegliederten Synchronantrieben.

Die in der Zeichnung dargestellte Übertragungseinrichtung dient zum Zuführen von senkrecht herangeförderten Flaschen 1 in die etwa horizontal ausgerichteten Aufnahmezellen 2 einer nicht weiter dargestellten Flaschenreinigungsmaschine als Ausführungsbeispiel. Die Zellen 2 können sich absatzweise oder kontinuierlich bewegen und transportieren die einmal aufgenommenen Flaschen 1 durch verschiedene Behandlungsbäder bis hin zu einer nicht dargestellten Abgabeseite dieser Maschine, die entsprechend der hier beschriebenen Übertragungseinrichtung mit umgekehrtem Ablauf ausgelegt sein kann. Zum Zuführen der Flaschen 1 dient ein Transporteur 3, dem sich ein schräggeneigtes Übergabeblech 4 anschließt, durch welches sich Mitnehmer 5, 5' einer bei kontinuierlichem Betrieb ständig rotierenden Scheibe 6 bewegen. Am Ende des Übergabebleches 4 grenzt eine bogenförmig ausgelegte Abstützfläche 7 an. Diese besteht beispielsweise aus nebeneinander angeordneten Stäben oder Führungsbahnen, so daß die Mitnehmer 5, 5' ungehindert hindurchtreten können. In Höhe der Übergabestelle 8 ist die Abstützfläche 7' schräg geneigt und erlaubt auf diese Weise selbst bei kontinuierlichem Vorschub der Aufnahmezellen 2 ein ungehindertes Einschieben der Flaschen 1. Die Abstützfläche 7 kann aber auch auf- und ab beweglich gelagert sein und sich entsprechend der Vorschubbewegung der Aufnahmezellen 2 neigen.

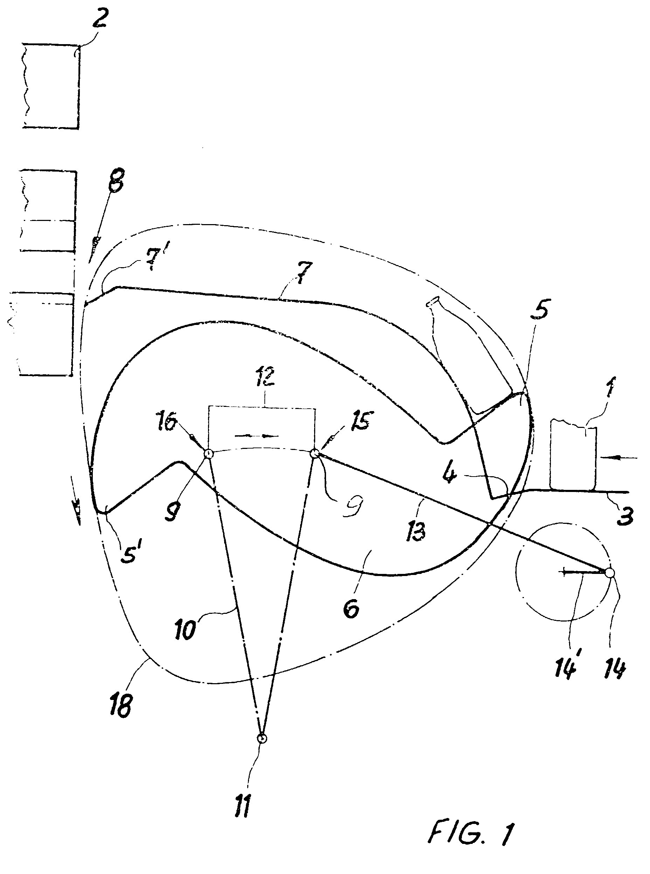

Die Achse 9 der Mitnehmerscheibe 6 ist gemäß dem dargestellten Ausführungsbeispiel an einer Schwinge 10 gelagert, die um eine Achse 11 innerhalb eines Bewegungsabschnittes 12 hin- und herbewegbar ist. An der Achse 9 greift ferner eine Koppel 13 eines Kurbeltriebes 14 an. Die Bewegungen der Kurbel 14' des Kurbeltriebes 14 sind so abgestimmt, daß die Schwinge 10 während eines Arbeitstaktes, d. h., gemäß dem dargestellten Ausführungsbeispiel während eines Einschubtaktes, eine Umdrehung vollzieht und die Achse 9 der Mitnehmer 5 von der Ausgangsposition 15 bis zur Endposition 16 und wieder zurückgeführt wird. Demgegenüber durchfahren die Mitnehmer 5, 5' jeweils eine halbe Umdrehung, so daß sie von der Ausgangsposition in Höhe des Übergabebleches 4 bis zur Übergabestelle 8 bewegt werden. Durch die Überlagerung dieser Bewegungen durchfährt die Abstützfläche der Mitnehmer 5, 5' eine Bahnkurve, die gemäß der strichpunktiert dargestellten Bahnkurve 18 verläuft. Dadurch werden die Mitnehmer 5, 5', wie Fig. 1 zeigt, mit relativ geringem Abstand bis zur Stirnseite der Aufnahmezellen 2 und anschließend mit diesen geringfügig weiter und dann wieder zurück in die Ausgangsposition geführt.

Die einlaufenden Flaschen 1 werden durch einen nicht weiter dargestellten Stautisch in Richtung auf die Mitnehmer 5, 5' abgedrängt und stützen sich bodenseitig auf dem Übergabeblech 4 und mantelseitig an der Abstützfläche 7 ab. Sobald nun die Achse 9 die Pos. 15 des Bewegungsabschnittes 12 erreicht hat, gelangen die Mitnehmer 5 unter die Flaschen 1 und bewegen diese entlang der Abstützfläche 7 bis hin zur Übergabestelle 8, wo die Flaschen 1 dann von den Aufnahmezellen 2 übernommen werden. Während dieser Überschubbewegung tritt nach Übernahme der Flaschen 1 eine Beschleunigung entlang der Linie 18 auf, die kurz vor Übergabe der Flaschen aufgrund der sich absenkenden Bahnkurve entsprechend verringert wird, so daß ein relativ gefahrloses Überschieben in die Zellen 2 stattfindet. Sobald nun ein Mitnehmer 5 die Übergabestelle 8 erreicht hat, befindet sich der damit korrespondierende zweite Mitnehmer 5' in Höhe des Übergabebleches 4, um erneut eine inzwischen nachgerückte Flaschenreihe aufzunehmen.

Gemäß dem in der Zeichnung dargestellten Ausführungsbeispiel wurde zur Durchführung der einzelnen Bewegungen ein Getriebe nach Art einer Kurbelschwinge gewählt. Es ist aber auch denkbar, die Achse 12 mit einem nicht weiter dargestellten Synchronantrieb, beispielsweise Linearantrieb zu verbinden, der in der vorbeschriebenen Weise mit der Koppel 13 oder direkt mit der Schwinge 10 in Verbindung steht. Die Anordnung der einzelnen Getriebe sowie die Abstützung der Schwinge unterhalb der Übertragungseinrichtung kann zur Veränderung der Bahnkurve 18 beliebig variiert werden. Auf diese Weise ist es ferner möglich, die beschriebene Vorrichtung auch zur Entnahme von Flaschen aus Aufnahmezellen 2 einzusetzen, wobei die Mitnehmer 5, 5' zur Abnahme einer Flaschenreihe entsprechend ausgebildet sein müssen.

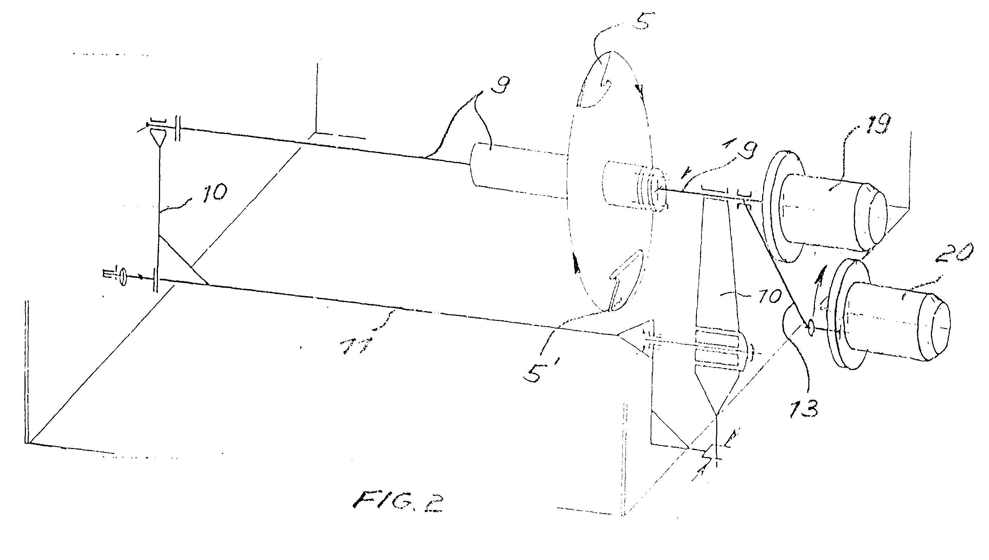

Gemäß dem in Fig. 2 dargestellten Ausführungsbeispiel ist an der Mitnehmerachse 9 ein Synchronantrieb 19 angeordnet, mit dem eine variable Geschwindigkeitsansteuerung der Mitnehmer 5, 5' direkt in beliebiger Auslegung hinsichtlich der gewünschten Beschleunigungsabläufe bzw. Verzögerungsabläufe vorgenommen werden kann.

Die Schwinge 10 kann von einem Kurbeltrieb, wie bereits ausgeführt, mit einem weiteren Synchronantrieb 20 angesteuert werden. Es ist aber auch denkbar, einen Synchronantrieb in Form eines Linearantriebes direkt an der Schwinge 10 angreifen zu lassen, mit dem dann in Abhängigkeit von der Bewegungsgeschwindigkeit der Flaschen in der Reinigungsmaschine oder in Abhängigkeit von der Drehzahl eines Hauptantriebsmotors die Schwingenbewegung und die Drehzahl des Synchronantriebes 19 eingeleitet wird. Durch die einzeln und/oder gemeinsam in Abhängigkeit von der Durchsatzleistung der Reinigungsmaschine ansteuerbaren Synchronmotoren 19, 20 können alle erforderlichen Bewegungsabläufe optimal auch bei Einsatz unterschiedlicher Flaschen eingeleitet werden.

## Patentansprüche

1. Vorrichtung zum Transportieren von Gefäßen wie Flaschen und dgl. entlang einer Abstützfläche (7), beispielsweise zum Auf- und Abgeben von Flaschen (1) in bzw. aus Reinigungsmaschinen mit einem Transporteur und einer Übertragungseinrichtung, bestehend aus mehreren nebeneinander angeordneten Scheiben (6) mit Mitnehmern (5, 5'), welche um eine gemeinsame Achse (9) rotieren, wobei die Rotationsachse der Mitnehmer (5, 5') entlang einer annähernd geradlinigen Bewegungsbahn (12) in Vorschubrichtung der Übertragungseinrichtung während eines Einschub- oder Ausschubtaktes vor- und zurückbewegbar geführt ist und der jeweils in Arbeitsposition befindliche Einschub- bzw. Mitnehmerarm (5, 5') innerhalb dieses Bewegungsabschnittes (12) von seiner Ausgangs- bzw. Aufnahmeposition in die entsprechende Abgabe- bzw. Einschubposition (8) verfahrbar ist, wobei an der Mitnehmerachse (9) ein Synchronantrieb (19) angeordnet ist, der eine variable Rotationsbewegung der Mitnehmer (5, 5') unmittelbar ansteuert und die Mitnehmerachse (9) an einer Schwinge (10) gelagert ist, die ihrerseits einen weiteren Synchronantrieb (20) aufweist, wobei die Antriebsgeschwindigkeit der Synchronantriebe (19, 20) durch die Bewegungsgeschwindigkeit der Flaschen (1) in der Reinigungsmaschine ansteuerbar ist.

2. Vorrichtung nach Anspruch 1, ***dadurch gekennzeichnet***, daß die Drehzahl der Synchronantriebe (19, 20) einzeln und/oder gemeinsam von einem Hauptantriebsmotor ansteuerbar sind.

3. Vorrichtung nach Anspruch 1, ***dadurch gekennzeichnet***, daß die Mitnehmer (5, 5') während der Übernahme der Gefäße (1) verzögert an diese herangeführt und darauf mit den Gefäßen (1) beschleunigt und zu deren Übergabe wieder verzögert werden.

4. Vorrichtung nach Anspruch 1, ***dadurch gekennzeichnet***, daß mit der Verzögerung der Rotationsgeschwindigkeit der Mitnehmer (5, 5') auch eine Verzögerung der Verschwenkgeschwindigkeit der Schwinge durch den diesen antreibenden Synchronantrieb (20) einleitbar ist.
